# EUROPEAN PATENT SPECIFICATION

(11) **EP 4 243 173 B1**
(45) Date of publication and mention of the grant of the patent: **22.04.2026**
(21) Application number: 22826587.2
(22) Date of filing: 12.10.2022
(51) Int. Cl.: H01M 50/213, H01M 50/244, H01M 50/249, H01M 50/258, H01M 50/264, H01M 10/613, H01M 10/625, H01M 10/6555, H01M 10/6556, H01M 10/6568, H01M 10/6557, H01M 10/6567, H01M 10/643, H01M 50/233, H01M 50/35, H01M 50/503

(54) **BATTERY CELL MODULE AND BATTERY SYSTEM**
BATTERIEZELLENMODUL UND BATTERIESYSTEM
MODULE D'ÉLÉMENT DE BATTERIE ET SYSTÈME DE BATTERIE

(30) Priority: 29.01.2022 CN 202220245037 U
(43) Date of publication of application: 13.09.2023
(73) Proprietor: Eve Power Co., Ltd., Jingmen, Hubei 448000 (CN)
(72) Inventor: QIU, Wencong, Jingmen, Hubei 448000 (CN); LI, Fan, Jingmen, Hubei 448000 (CN); CHEN, Zhiwei, Jingmen, Hubei 448000 (CN); CHEN, Zhaohai, Jingmen, Hubei 448000 (CN)
(74) Representative: Grünecker Patent- und Rechtsanwälte PartG mbB
(86) International application number: PCT/CN2022/124938
(87) International publication number: WO 2023/142531

(56) References cited:
- EP-A1- 3 547 398
- EP-A1- 3 828 987
- CN-A- 107 546 405
- CN-A- 108 923 101
- CN-A- 109 119 556
- CN-A- 111 092 179
- CN-A- 111 092 179
- CN-A- 111 373 599
- CN-A- 113 937 411
- CN-U- 205 882 033
- CN-U- 206 332 064
- CN-U- 210 744 033
- CN-U- 217 158 421
- US-A1- 2018 366 701
- US-A1- 2021 391 628

## Description

### TECHNICAL FIELD

The present application relates to the field of battery technology, and more specifically to a cell module according to the preamble of claim 1 and a battery system comprising such a cell module. A similar cell module is known from CN 107 546 405 A.

### BACKGROUND

New energy vehicles, such as those powered by lithium batteries, are developing rapidly. The cylindrical cells in the lithium batteries are widely used in power systems, and because of their small monomer capacities, the number of cells in a single string may be large.

In a common cylindrical cell module, after multiple cells are disposed in a matrix, every two rows of cells are in a set, and a liquid cooling plate is disposed between two adjacent rows of cells in each set to control the temperature of the cells through heat exchange between the liquid cooling plate and the cells, thereby avoiding a safety accident caused by abnormal temperature of the cells. In the cell module of the related art, the distance between two adjacent rows of cells is equal, and the spacing is sufficient to mount the liquid cooling plate, so that the spacing between the cell sets is large, the arrangement of the cell module is not compact, the overall size of the cell module is large, and the manufacturing cost of the cell module is increased.

### SUMMARY

A cell module and a battery system are provided according to the present application, which can address the issues of incompact structure and high cost of the cell module.

In a first aspect, a cell module is provided according to independent claim 1, which includes: a cell fixing bracket, multiple rows of cell groups and a liquid cooling plate. Specifically, all of the cell groups are disposed on the cell fixing bracket, each row of cell group includes multiple cells, each row of cell group other than a first row of cell group and a last row of cell group has a first spacing H from an adjacent row of cell group, and has a second spacing h from another adjacent cell group, and the first spacing H is greater than the second spacing h. The liquid cooling plate is disposed between the two rows of cell groups spaced apart by the first spacing H, and is configured to regulate the temperature of multiple cells near the liquid cooling plate.

According to the invention, the cell fixing bracket includes multiple bracket sets arranged in a second direction Y, each of the bracket sets includes two adjacent bracket bodies arranged in the second direction Y, the two adjacent bracket bodies arranged in the second direction Y are detachably connected, each of the bracket bodies is provided with multiple mounting portions disposed in a first direction X, each of the mounting portions is configured to mount one cell, and the second direction Y and the first direction X are set at an included angle.

According to a first definition of the invention, a centerline of the multiple mounting portions parallel to the first direction X is a first centerline b, and a centerline of each of the bracket bodies parallel to the first direction X is a second centerline a; the first centerline b and the second centerline a are set at an interval; and two first centerlines b of the mounting portions respectively disposed on the two bracket bodies of each bracket set are located on two sides of the two second centerlines a of the two bracket bodies, respectively.

According to a second, alternative definition of the invention, a centerline of the multiple mounting portion parallel to the first direction X is a first centerline b, and a centerline of each bracket body parallel to the first direction X is a second centerline a; and in the two bracket bodies of each bracket set, a first center line b of mounting portions disposed on a first bracket body and a second center line a of the first bracket body are set at an interval, and a first center line b of mounting portions disposed on a second bracket body coincides with a second center line a of the second bracket body.

In an embodiment, each of the mounting portions is a mounting groove, and an end portion of each of the cells is fixed in the mounting groove.

In an embodiment, each of the bracket bodies includes multiple splicing seats arranged in the first direction X, each two adjacent splicing seats are detachably connected, and each of the splicing seats is provided with one mounting portion.

In an embodiment, each of the splicing seats is provided with an engaging portion, and the two adjacent splicing seats are engaged into each other through the engaging portions.

In an embodiment, each of the splicing seats is of a regular prismatic structure, a sidewall on each side of each of the splicing seats is provided with an engaging portion, and two adjacent bracket bodies are engaged into each other through the engaging portions.

In an embodiment, each of the splicing seats is of a regular hexagonal prismatic structure.

In an embodiment, the liquid cooling plate is a corrugated plate to allow the liquid cooling plate to cool each of cells on adjacent two sides of the liquid cooling plate.

In an embodiment, each of the splicing seats includes: a baseplate, and multiple side plates. The baseplate is a regular polygonal plate; and each side edge of the baseplate is connected to a side plate, the baseplate and the multiple side plates enclose to define the mounting groove, an end portion of each of the cells is disposed in the mounting groove, and each of the side plates is provided with the engaging portion.

In one embodiment, a number of the side plates provided on each of the splicing seats is an even number, and in oppositely disposed two side plates, the engaging portion of a first side plate is an engaging block, and the engaging portion of a second side plate is an engaging groove.

In an embodiment, the liquid cooling plate is in communication with a connecting tube.

In an embodiment, the number of the cell fixing racks provided is two, and two end portions of each of the cells are connected in one-to-one correspondence to two cell fixing racks, respectively.

In an embodiment, two end portions of each of the cells include a top end portion and a bottom end portion, the cell fixing bracket, to which the top end portion of each of the cells is connected, is provided with, corresponding to each of the cells, a first through hole, and an electrode terminal of the top end portion of each of the cells protrudes out from the first through hole to be connected to a busbar.

In an embodiment, the cell fixing bracket, to which the top end portion of each of the cells is connected, is made of an insulating material and supports the busbar.

In an embodiment, the cell fixing bracket, to which the top end portion of each of the cells is connected, is provided with a flange around the first through hole, and the flange is configured to support the busbar.

In an embodiment, the flange is provided with a positioning column, and the positioning column is configured to fix the busbar.

In embodiment, two end portions of each of the cells include a top end portion and a bottom end portion, a cell fixing bracket, to which the bottom end portion of each of the cells is connected, is provided with, corresponding to the bottom end portion of each of the cells, a pressure relief chamber in communication with a mounting groove, and the cell fixing bracket, to which the bottom end portion of each of the cells is connected, is further provided with a pressure relief hole in communication with the pressure relief chamber.

In a second aspect, a battery system is provided according to dependent claim 12, which includes the above-described cell module.

The present application has the beneficial effects below.

In the cell module according to the present invention, each row of cell group other than the first row of cell group and the last row of cell group has a first spacing from one row of cell group on one adjacent side thereof, and has a second spacing from one row of cell group on the other adjacent side thereof, and the first spacing is greater than the second spacing. The liquid cooling plate is installed between the two rows of cell groups separated by the first spacing, thus the distance between the two rows of cell groups with no liquid cooling plate disposed therebetween can be saved on the basis that the temperature of the cells can be controlled, so that the structure of the cell module can be more compact and the overall size can be small.

The battery system according to the present application employs the cell module described above, so the battery system has a small overall size and is beneficial to reduce costs.

### BRIEF DESCRIPTION OF DRAWINGS

FIG. 1 is a schematic structural diagram of a cell module according to embodiment one of the present application;
FIG. 2 is a schematic structural diagram of a cell module according to embodiment one of the present application in an unassembled state;
FIG. 3 is a first schematic diagram of a cell module according to embodiment one of the present application in which multiple cells are fixed to a cell fixing bracket;
FIG. 4 is a second schematic diagram of a cell module according to embodiment one of the present application in which multiple cells are fixed to a cell fixing bracket;
FIG. 5 is a third schematic diagram of a cell module according to embodiment one of the present application in which multiple cells are fixed to a cell fixing bracket;
FIG. 6 is a schematic structural diagram of a cell module according to embodiment one of the present application in which multiple cells are fixed to a cell fixing bracket;
FIG. 7 is a schematic structural diagram of a liquid cooling plate according to embodiment one of the present application;
FIG. 8 is a schematic diagram showing a partial structure of a cell module according to embodiment two of the present application;
FIG. 9 is a top view of two cells according to embodiment two of the present application in a state of being detachably connected by end covers;
FIG. 10 is a schematic structural diagram of a cell, an end cover, and a base seat according to embodiment two of the present application in an unassembled state;
FIG. 11 is a partially enlarged view of a part A in FIG. 8;
FIG. 12 is a schematic structural diagram of two cells according to embodiment three of the present application after being detachably connected by end covers and base seats;
FIG. 13 is a schematic structural diagram of a base seat according to embodiment four of the present application; and
FIG. 14 is a top view of a base seat according to embodiment four of the present application.

**Reference numerals in the drawings:**

| | | | |
|---|---|---|---|
| 1. | cell; | 10. | cell group; |
| 11. | electrode terminal; | 20. | cell fixing bracket; |
| 201. | bracket body; | 202. | splicing seat; |
| 203. | end cover; | 204. | base seat; |
| 205. | mounting portion; | 206. | bracket set; |
| 21. | end cover baseplate; | 211. | first through hole; |
| 22. | side plate; | 221. | engaging block; |
| 222: | engaging groove; | 223. | groove; |
| 224. | adhesive injection hole; | 225. | notch; |
| 23. | flange; | 231. | positioning column; |
| 24. | base seat baseplate; | 241. | upper plate; |
| 2411. | second through hole; | 2412. | adhesive application recess; |
| 242. | lower plate; | 243. | reinforcing block; |
| 244. | pressure relief hole; | 3. | liquid cooling plate; |
| 25. | pressure relief chamber; | 26. | engaging portion; |
| 31. | connecting tube; | 32. | mounting groove; |
| 4. | module upper cover; | 5. | integrated assembly; |
| 51. | busbar; | 6. | foamable adhesive layer; and |
| 7. | structural adhesive layer. | | |

### DETAILED DESCRIPTION

In the description of the present application, unless otherwise expressly specified and limited, the terms "connected to each other", "connected", "fixing" are to be construed in a broad sense, for example, as permanently connected or detachably connected or integrally connected; mechanically connected or electrically connected; directly connected to each other or indirectly connected to each other via an intermediary; or internally connection of two components or interaction relationship between two components. For those of ordinary skill in the art, specific meanings of the preceding terms in the present application may be construed based on specific situations.

In the present application, unless otherwise expressly specified and limited, when a first feature is described as "above" or "below" a second feature, the first feature and the second feature may be in direct contact, or be in contact via another feature between the two features. Moreover, when the first feature is described as "on", "above" or "over" the second feature, the first feature is right on, above or over the second feature or the first feature is obliquely on, above or over the second feature, or the first feature is simply at a higher level than the second feature. When the first feature is described as "under", "below" or "underneath" the second feature, the first feature is right under, below or underneath the second feature or the first feature is obliquely under, below or underneath the second feature, or the first feature is simply at a lower level than the second feature.

In the description of this embodiment, the orientation or position relationship indicated by terms such as "over", "below", "left", "right" is based on the orientation or position relationship shown in the drawings, which is only for the convenience of describing and simplifying the operation, rather than indicating or implying that the device or element referred to must have a specific orientation, be configured and operated in a specific orientation, so it cannot be understood as a limitation to the present application. Furthermore, the terms "first" and "second" are only used for distinguishing in description without any special meaning.

### Embodiment one

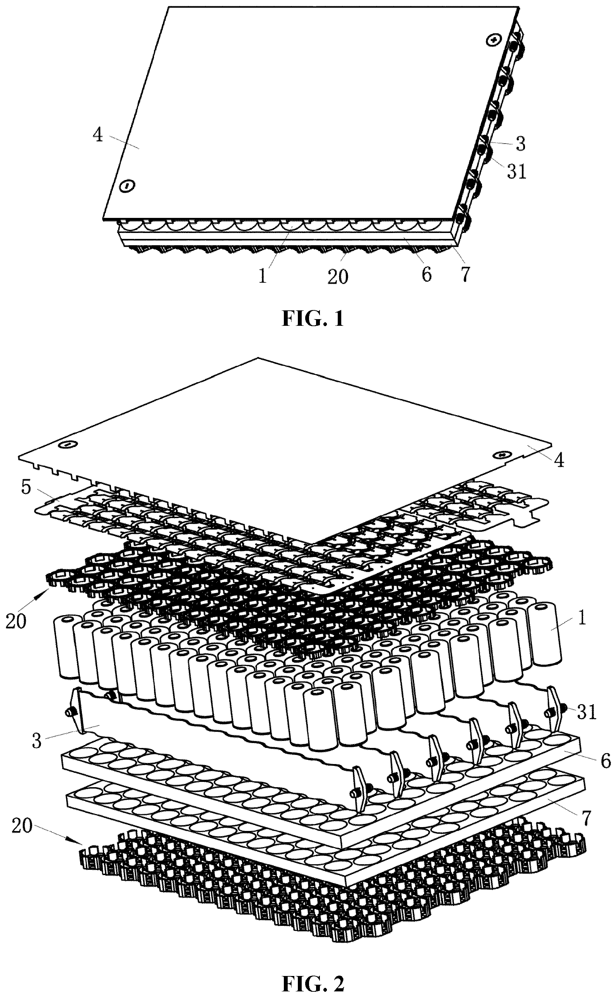

As shown in FIG. 1 and FIG. 2, a battery system is provided according to this embodiment, which includes a cell module. The cell module includes a cell fixing bracket 20, multiple cells 1 and a liquid cooling plate 3. The multiple cells 1 are disposed on the cell fixing bracket 20 and form multiple rows of cell groups 10. Every two rows of the multiple rows of cell groups 10 form one set, a liquid cooling plate 3 is disposed between the two rows of cell groups 10 of the same set, and the liquid cooling plate 3 is in contact with the two adjacent rows of cells 1 and transmits heat so as to adjust the temperature of the cells 1, thereby avoiding a safety accident caused by abnormal temperature of the cells 1.

Optionally, the cell module further includes a foamable adhesive layer 6 and a structural adhesive layer 7. The foamable adhesive layer 6 and the structural adhesive layer 7 are sleeved on the cells 1, for filling gaps between adjacent cells 1 to allow the position of the cells 1 to be more stable. The foamable adhesive layer 6 and the structural adhesive layer 7 can functions as buffers to reduce the adverse effects of the vibration impact on the cells 1 and the cell fixing bracket 20, which may facilitate the improvement of the stability of structure of the cell module.

Optionally, the foamable adhesive layer 6 and the structural adhesive layer 7 each have a thickness ranging from 5mm to 30mm, for example 10mm, 15mm, 20mm or 25mm, to better play the roles in fixing the cells 1 and buffering.

The cell module further includes a module upper cover 4 and an integrated assembly 5. The integrated assembly 5 is disposed on an upper bracket body of the cell fixing bracket 20, and the module upper cover 4 is disposed on the integrated assembly 5. The integrated assembly 5 includes a busbar 51 configured to connect the multiple cells 1 in series/parallel for conduction. The module upper cover 4 functions to insulate to prevent short circuit due to contact of the integrated assembly 5 with an external metal.

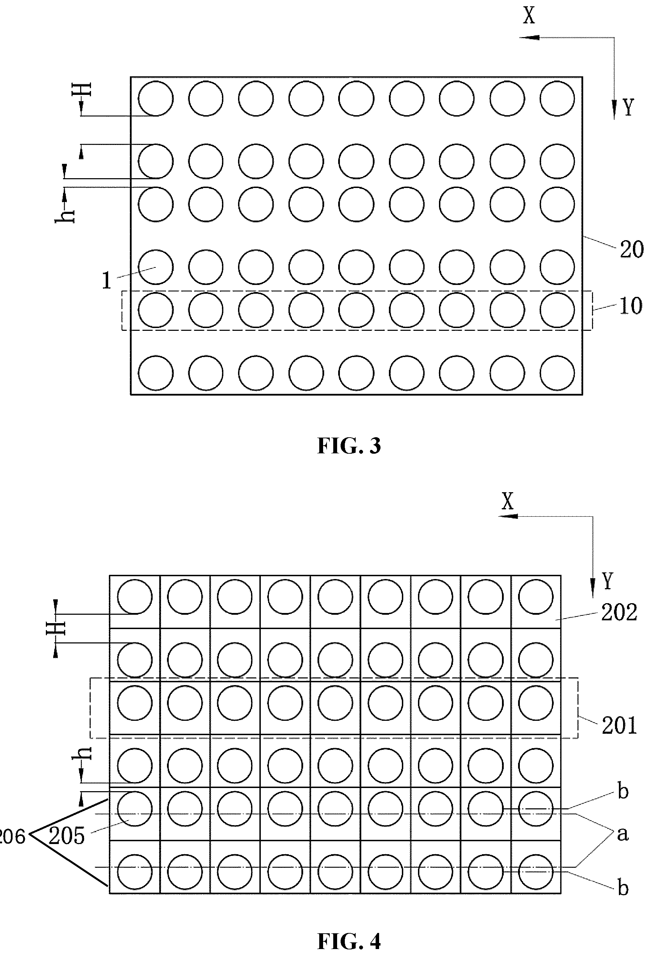

As shown in FIG. 3, in the multiple rows of cell groups 10 in this embodiment, each row of cell group 10 other than a first row of cell group 10 and a last row of cell group 10 has a first spacing H from one row of cell group 10 on one adjacent side thereof, and has a second spacing h from one row of cell group 10 on the other adjacent side thereof, and the first spacing H is greater than the second spacing h. The liquid cooling plate 3 is disposed between the two rows of cell groups 10 spaced apart by the first spacing H. With the above configuration, it is possible to make the distance between the two adjacent rows of cell groups 10, with the liquid cooling plate 3 disposed therebetween, relatively large to meet the requirements for installation of the liquid cooling plate 3, and moreover, reduce the distance between the two adjacent rows of cell groups 10, with no liquid cooling plate 3 disposed therebetween, avoid the waste of space between the two adjacent rows of cell groups 10, with no liquid cooling plate 3 disposed therebetween, to make the two adjacent rows of cell groups 10, with no liquid cooling plate 3 disposed therebetween, more compact, which facilitates the reduction of the overall size of the cell module to save space.

It is understood that the cell groups 10 may optionally be disposed in even rows so that every two cell groups of the multiple cell groups 10 are disposed in a set, and the liquid cooling plate 3 is disposed between the two rows of cell groups 10 of each set, so that each row of cell group 10 has a liquid cooling plate 3 for heat exchanging therewith to ensure that the temperature of each cell 1 can be controlled.

As shown in FIG. 4, in this embodiment, the cell fixing bracket 20 includes multiple bracket sets 206 arranged in a second direction Y, each bracket set 206 includes two bracket bodies 201 arranged in the second direction Y, each bracket body 201 is provided with multiple mounting portions 205 arranged in a first direction X, and each of the mounting portions 205 is configured to mount one cell 1, that is, one bracket body 201 is configured to mount one row of cell group 10. Each two bracket bodies 201 adjacent in the second direction Y are detachably connected to form an entire cell fixing bracket 20. By splicing the multiple bracket bodies 201 to form the cell fixing bracket 20, it is possible to ensure that after each row of the cells 1 are mounted to the bracket body 201, the multiple bracket bodies 201 with the cells 1 mounted thereon are detachably connected to form the cell fixing bracket 20, which facilitates simplifying the assembling of the cell modules, and moreover, when to assemble the cell module, it is possible to ensure that each bracket body 201 and the multiple cells 1 thereon are accurately positioned, thus, the spacing between two adjacent rows of cells 10 can be ensured, thereby improving the positioning accuracy.

In order that the spacing between the two adjacent rows of cell groups 10 meets the above-described configuration, exemplarily, a centerline, parallel to the first direction X, of each row of mounting portions 205 is defined as a first centerline b, and a centerline, parallel to the first direction X, of each bracket body 201 is defined as a second centerline a, so that the first centerline b and the corresponding second centerline a are set at an interval, and in the same bracket set 206, the two first centerlines b corresponding to the two rows of mounting portions 205 are respectively located at two sides of the two second centerlines a of the two bracket bodies 201. By setting the first centerline b and the second centerline a at an interval, the cell 1 mounted on each mounting portion 205 of the bracket body 201 is eccentrically disposed with respect to the second centerline a, thereby increasing the distance between the two rows of cell groups 10 in the same bracket set 206 to provide the installation space for the liquid cooling plate 3; and reducing the distance between the two adjacent rows of cell groups 10 in the adjacent bracket sets 206.

As shown in FIG. 4, it is defined that multiple racks 201 are respectively a first bracket body, a second bracket body to a sixth bracket body in the reverse direction of the second direction Y, where the first bracket body and the second bracket body form one bracket set 206, the third bracket body and the fourth bracket body form one bracket set 206, and the fifth bracket body and the sixth bracket body form one bracket set 206. The first center line b of the row of mounting portions 205 in the first bracket body is offset from the second center line a of the first bracket body by a first distance in the second direction Y, that is, for the first bracket body, the first center line b and the second center line a are arranged in the reverse direction of the second direction Y. The first center line b of the mounting portion 205 in the second bracket body is offset from the second center line a of the second bracket body by a first distance in the reverse direction of the second direction Y, that is, for the second bracket body, the first center line b and the second center line a are arranged in the second direction Y. The structure of the third bracket body is the same as that of the first bracket body, the structure of the fourth bracket body is the same as that of the second bracket body, the structure of the fifth bracket body is the same as that of the first bracket body, and the structure of the sixth bracket body is the same as that of the second bracket body. In an embodiment, the first distances of the above offsets are equal.

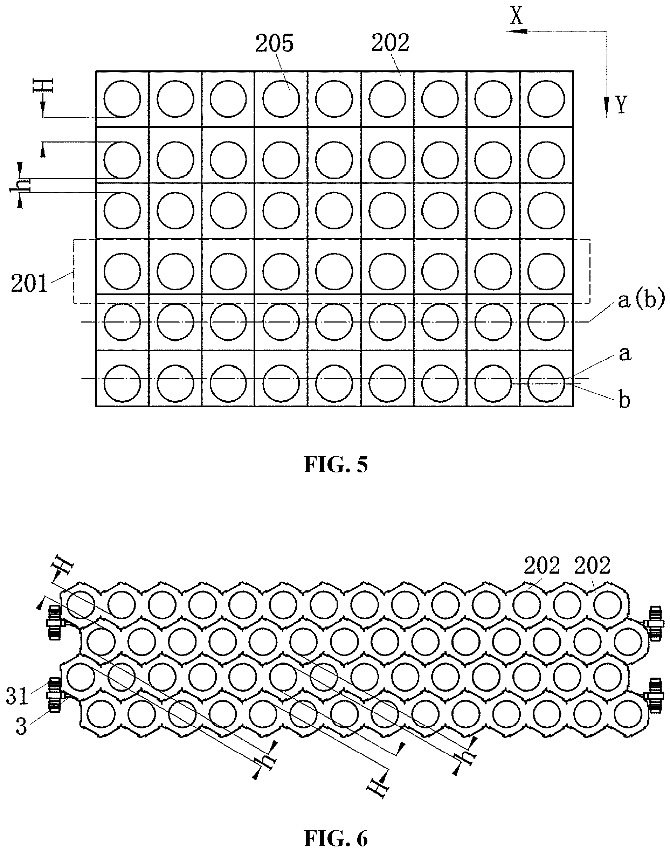

In an embodiment, as shown in FIG. 5, in two bracket bodies 201 of each bracket set 206, the first center line b of each of the mounting portions 205 on the first bracket body 201 is disposed at a spacing from the second center line a of the first bracket body 201, and the first center line b of each of the mounting portions 205 on the second bracket body 201 coincides with the second center line a of the second bracket body 201. This configuration may also allow each row of cell group 10 in the cell module to have different spacings from the adjacent cell groups 10 on two sides thereof.

As shown in FIG. 5, it is defined that multiple racks 201 are respectively a first bracket body, a second bracket body to a sixth bracket body in the reverse direction of the second direction Y, where the first bracket body and the second bracket body form one bracket set 206, the third bracket body and the fourth bracket body form one bracket set 206, and the fifth bracket body and the sixth bracket body form one bracket set 206. The first center line b of each of the mounting portions 205 in the first bracket body is offset from the second center line a of the first bracket body by a first distance in the second direction Y, that is, for the first bracket body, the first center line b of the mounting portion 205 is offset from the second center line a of the first bracket body by a first distance in a direction away from the second bracket body. The first center line b of the mounting portion 205 in the second bracket body coincides with the second center line a of the second bracket body, to increase the distance between the cell 1 on the first bracket body and the cell 1 on the second bracket body. The structure of the third bracket body is the same as that of the first bracket body, the structure of the fourth bracket body is the same as that of the second bracket body, and so on, the structure of the fifth bracket body is the same as that of the first bracket body, and the structure of the sixth bracket body is the same as that of the second bracket body.

In this embodiment, each of the mounting portions 205 is a mounting groove 32, and an end portion of the cell 1 is fixed in the mounting groove 32, so that sidewalls of the mounting groove 32 can limit an extension direction of the cell 1, thereby improving the fixing effect of the bracket body 201 to the cell 1.

In order to improve the positioning effect of the mounting groove 32 on the cell 1, it is required that the mounting groove 32 is fitted with the cell 1 by a certain depth. Optionally, the depth of the mounting groove 32 in the axial direction of the cell 1 is 5mm to 20mm, for example 8mm, 10mm, 15mm or 18mm.

Optionally, the end portion of the cell 1 is adhesively fixed in the mounting groove 32 to simplify the fixing structure for fixing the cell 1 to the mounting portion 205; thereby, on the premise of meeting the requirements for fixing the cell 1 to the mounting portion 205, the structure of the cell 1 can be prevented from being damaged and the size of the fixed cell module can be made small.

Optionally, each of the bracket bodies 201 includes multiple splicing seats 202 arranged in the first direction X, and each two adjacent splicing seats 202 are detachably connected, each of the splicing seats 202 is provided with one mounting portion 205, to provide each cell 1 with one splicing seat 202, to thereby further facilitating the assembling of the cell module, thereby facilitating the improvement of the assembling accuracy of the cell module.

In order to facilitate the engagement of adjacent splicing seats 202, the splicing seats 202 are provided with engaging portions 26, and two adjacent splicing seats 202 are engaged with each other by means of the engaging portions 26.

The splicing seat 202 is a regular prismatic structure, and each sidewall of the splicing seat 202 is provided with an engaging portion 26 to enable each splicing seat 202 to be spliced with multiple splicing seats 202, and further allow adjacent bracket bodies 201 to be engaged by the engaging portions 26, to simplify the structure of the cell fixing bracket 20. As shown in FIG. 6, the splicing seat 202 is a regular hexagonal prism, to allow the structure obtained by splicing the multiple splicing seats 202 to be more compact.

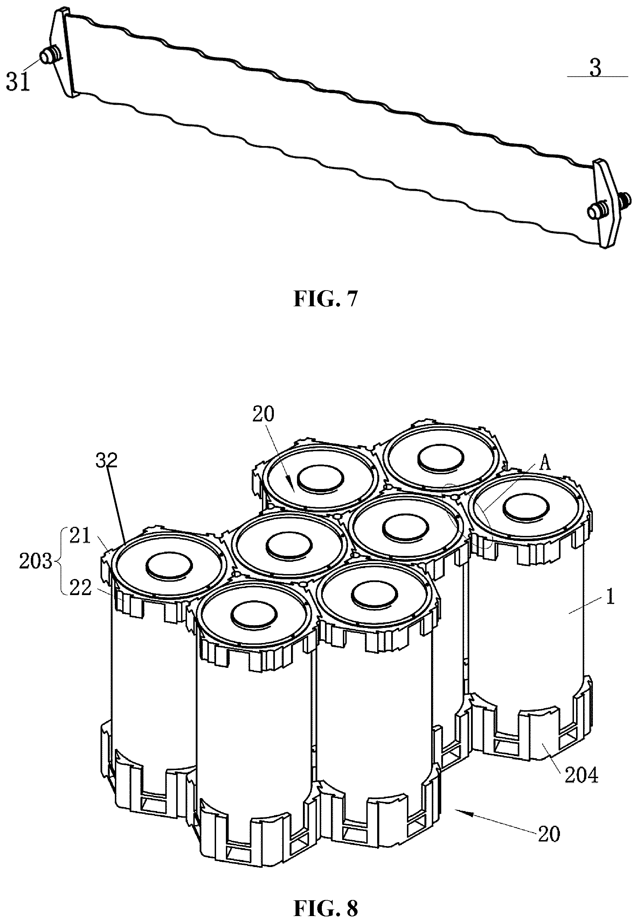

In this embodiment, the cells 1 are each cylindrical in shape, which, in combination with the regular hexagonal prism shaped splicing seats 202, allows the cells 1 in two adjacent rows of cell groups 10 to be staggered. In order to enable the liquid cooling plate 3 to contact the two adjacent rows of cell groups 10, respectively, the liquid cooling plate 3 is a corrugated plate. As shown in FIG. 7, the corrugated plate is provided with concave portions and convex portions alternately, and the concave portion is an arc-shaped structure adapted to the shape of the outer sidewall of the cell 1. The corrugated plate is concavely formed with the concave portion on a first side, and is formed with the convex portion on a second side. After the liquid cooling plate 3 is disposed between the two rows of cell groups 10, the concave portion abuts against the outer sidewall of the cell 1, and the convex portion is located in a gap between two adjacent cells 1 of the same row.

The liquid cooling plate 3 has a connecting tube 31 connected thereto, and via the connecting tube 31, the liquid cooling plates 3 adjacent to each other can be in communication with each other or the liquid cooling plate 3 can be in communication with other tubes.

In this embodiment, two cell fixing racks 20 are provided, and two end portions of the cell 1 in an axial direction of the cell 1 are respectively fixed to two cell fixing racks 20, so that the two end portions of the cell 1 are both restrained, thereby improving the effect of fixing of the cell 1.

### Embodiment two

A battery system is provided according to this embodiment. On the basis of embodiment one, as shown in FIG. 8, each of the splicing seats 202 includes a baseplate 21 and multiple side plates 22, specifically, the baseplate 21 is a regular polygonal plate, each side edge of the baseplate 21 is connected to one side plate 22, the baseplate 21 and the multiple side plates 22 enclose to define a mounting groove 32, an end portion of each cell 1 is disposed in the mounting groove 32, and each side plate is provided with an engaging portion 26.

The two end portions of the cell 1 include a top end portion and a bottom end portion. The splicing seat 202 on each bracket body 201 of the cell fixing bracket 20 connected to the top end portion of the cell 1 is an end cover 203, and the splicing seat 202 on each bracket body 201 of the cell fixing bracket 20 connected to the bottom end portion of the cell 1 is a base seat 204.

It is not required to use a positioning tool in the process for assembling the cell module in this embodiment, and each of the cells 1 is correspondingly provided with one end cover 203 and one base seat 204, so that the multiple cells 1 are more conveniently grouped. In this embodiment, the end covers 203 adjacent to each other are detachably connected, and the base seats 204 adjacent to each other are detachably connected, which facilitates the improvement of accuracy of relative position between the cells 1, thereby improving the assembling accuracy of the cell module, and the number of the cells 1 assembled can be adjusted adaptively according to the capacity of the cell module and the size and shape of the case, thus the grouping manner is more flexible. After the multiple cells 1 are grouped, the multiple end covers 203 are connected to form an upper cell fixing bracket, and the multiple base seats 204 are connected to form a lower cell fixing bracket, thereby improving the structural strength and reliability of the cell module.

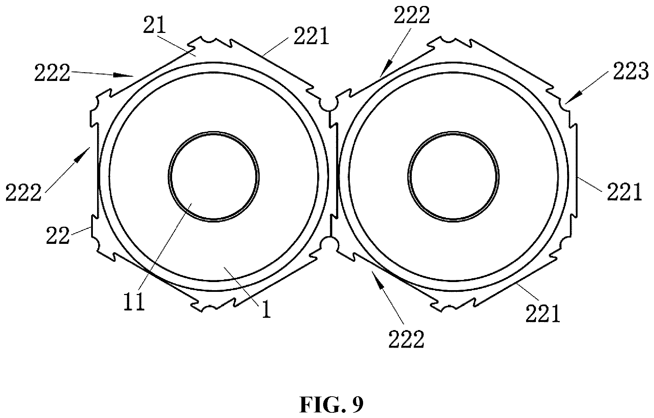

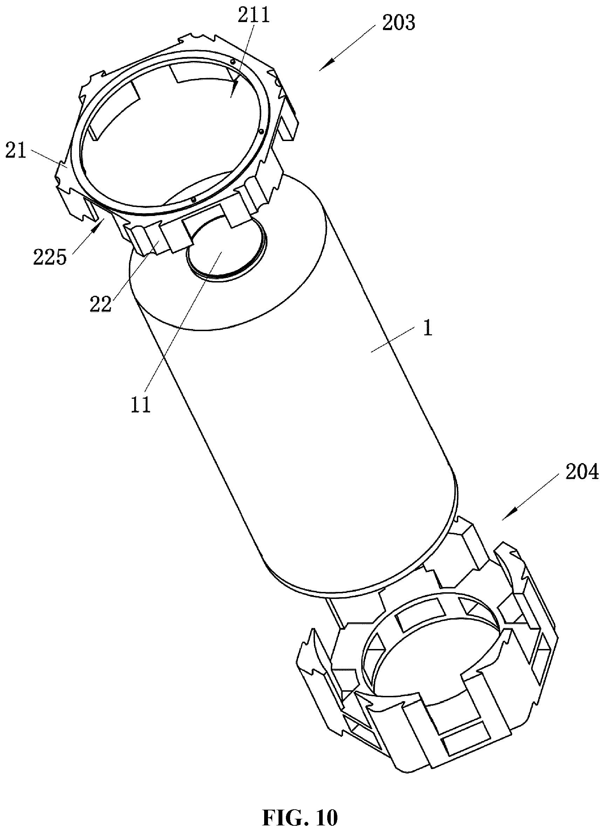

The end cover 203 includes an end cover baseplate 21 and multiple side plates 22, and the base seat 204 includes a base seat baseplate 24 and multiple side plates 22. The end cover 203 is taken as an example hereinafter, as shown in FIG. 9 and FIG. 10, the end cover baseplate 21 of the end cover 203 is a polygonal plate, each side edge of the end cover baseplate 21 is connected to one side plate 22, the end cover baseplate 21 and the multiple side plates 22 enclose to define the mounting groove 32, and each side plate 22 is provided with an engaging portion 26. It is understood that, on the basis that the dimension of the end cover 203 in a radial direction of the cell 1 is unchanged, the area of the end cover baseplate 203 when the end cover baseplate 21 is polygonal is smaller than the area of the end cover baseplate 21 when the end cover baseplate 21 is circular, so that space can be saved and the material required for manufacturing the end cover 203 can be saved, thereby facilitating cost reduction.

To facilitate splicing of multiple end covers 203, the end cover baseplates 21 are each a rectangular plate or a regular hexagonal plate. The rectangular plate and the regular hexagonal plate can make the splicing of the multiple cells 1 more compact, and the shape of the spliced region is a standard shape, which facilitates the planning of the installation position of the cell module in the battery system, and facilitates the improvement of space utilization rate.

In this embodiment, as shown in FIG. 9, in the two side plates 22 facing each other of the two adjacent end covers 203, the engaging portion 26 on the first side plate 22 is an engaging block 221, and the engaging portion 26 on the second side plate 22 is an engaging groove 222. The engaging block 221 can be engaged within the engaging groove 222 to achieve fixation of two adjacent end covers 203. The engaging block 221 is adapted to the engaging groove 222 in shape and size, so that, when the engaging block 221 is engaged in the engaging groove 222, the outer contours of the two side plates 22 facing each other coincide, so as to reduce the splicing gap and make the splicing more compact.

Optionally, the engaging groove 222 extends through two ends of the side plate 22 in an axial direction of the cell 1, so that the engaging groove 222 is a through groove. This configuration allows the engaging block 221 to be moved in both the forward and reverse directions of the axial direction of the end cover 203 so as to be engaged with or disengaged from the engaging groove 222, thereby, it is more convenient to mount.

Furthermore, by setting the engaging groove 222 as a through groove, the size errors of the engaging block 221 and the engaging groove 222 can also be tolerable. For example, in a case where the size of the engaging block 221 in the axial direction of the cell 1 is larger than that of the engaging groove 222, the position of the engaging block 221 fitted with the engaging groove 222 in the axial direction may be adjusted to allow the axial end faces of the adjacent end covers 203 to be flush with each other or the axial end faces of the adjacent cells 1 to be flush with each other, thereby ensuring accuracy of the relative positions of the multiple cells 1 after being grouped.

In this embodiment, the width of the engaging groove 222 gradually increases in the radial direction of the cell 1 from outside to the inside of the mounting groove 32, and the shape of the engaging block 221 is adapted to the shape of the engaging groove 222, so that after the engaging block 221 is fitted with the engaging groove 222, an inner wall of the engaging groove 222 can prevent the engaging block 221 from coming out of the engaging groove 222 in the radial direction of the cell 1, which facilitates the improvement of the engaging effect of the engaging block 221 with the engaging groove 222.

Illustratively, the engaging groove 222 is a trapezoidal shaped groove, and a cross-sectional shape of the engaging block 221 in the radial direction of the cell 1 is a trapezoidal shape.

In two opposite side plates 22 of the end cover 203, a first side plate 22 is provided with an engaging block 221, and a second side plate 22 is provided with an engaging groove 222. This structure makes the structures of the multiple end covers 203 identical, that is, only one type of end cover 203 in the cell module is required to be manufactured, which facilitates the reduction of machining cost and the easy splicing.

In this embodiment, the end cover 203 is a regular hexagonal cylinder structure, the three adjacent side plates 22 of the end cover 203 are provided with the engaging blocks 221, and the other three adjacent side plates 22 are provided with the engaging grooves 222.

Since the cell 1 is cylindrical, in order to improve the fixing and positioning effect of the mounting groove 32 on the cell 1, a side face of the side plate 22 facing towards the cell 1 is an arc-shaped face adapted to an outer sidewall of the cell 1, that is, the mounting groove 32 is a cylindrical slot. In order to facilitate the processing of the engaging block 221 and the engaging groove 222 on the side plates 22, the side faces of the side plates 22 facing away from cell 1 are planar, so as to reduce the processing difficulty, thereby facilitating the improvement of the processing accuracy of the engaging block 221 and the engaging groove 222. Moreover, the outer side face of the side plate 22 being of the planar further facilitates the improvement of the engaging accuracy of the opposing two side plates 22, making the structure of the adjacent two end covers 203 after connection more compact.

The side face of the side plate 22 facing away from the cell 1 is planar, and the side face of the side plate 22 facing the cell 1 is an arc-shaped face, so that the thickness of the side plate 22 is not uniform. The thickness at the connection position of the two side plates 22 is large, and the thickness at the intermediate position of each of the side plates 22 is small. In order to reduce the size of the cell module after being spliced and machining cost, the distance between the side plate 22 and the axis of the cell 1 is designed to be as small as possible, resulting in the small thickness of the middle portion of the side plate 22, so that the middle portion of the side plate 22 is not easy to process, has a poor strength, is prone to being deformed or broken.

To address the above issue, as shown in FIG. 10, the middle portion of the side plate 22 in this embodiment is provided with a notch 225. An opening of the notch 225 of the end cover 203 faces towards the base seat 204, and an opening of the notch 225 of the base seat 204 faces towards the end cover 203. By providing the notch 225, the portion, having a small thickness, of the side plate 22 can be removed, to reserve the portions, having a large thickness and a high strength, of the side plate 22, to thereby reducing the manufacturing difficulties of the end cover 203, improving the strength of the end cover 203, saving the material and facilitating reduction of the cost.

In this embodiment, the notch 225 extends to the end cover baseplate 21 such that each side plate 22 includes two extension arms disposed to be spaced apart, the extension arms in adjacent two side plates 22 are connected and located at a corner of the end cover baseplate 21.

It is understood that for the shape, structure, and connection relationship of the base seat baseplate 24 and the multiple side plates 22 of the base seat 204, reference may be made to the above description for the structure of the end cover 203, and details are not described in this embodiment.

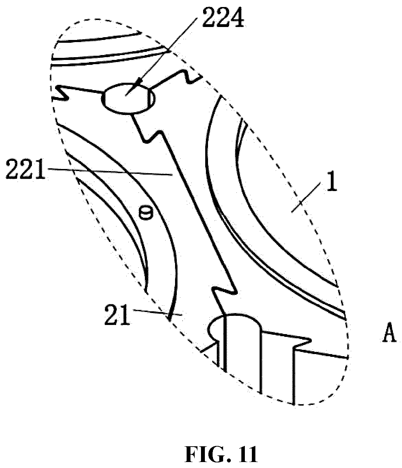

To facilitate the formation of the foamable adhesive layer 6 and the structural adhesive layer 7, as shown in FIG. 11, the adjacent end covers 203 enclose, after being spliced, to form an adhesive injection hole 224, for introducing adhesive into the gap between the adjacent cells 1.

As shown in FIG. 8 and FIG. 11, in this embodiment, the end cover 203 is of a regular hexagonal prism type, three adjacent end covers 203 form, after being spliced, an adhesive injection hole 224, and the adhesive injection hole 224 is a through hole extending in the axial direction of the cell 1. In order to conveniently enclose to form the adhesive injection hole 224, an arc-shaped groove 223 is provided at the joint of two adjacent side plates 22 in the end cover 203, and the central angle of the arc-shaped groove 223 is 120 degrees.

Optionally, as shown in FIG. 8 to FIG. 10, an end cover endplate 21 of the end cover 203 is provided with a first through hole 211, an end, fitted with the end cover 203, of the cell 1 is provided with an electrode terminal 11, the electrode terminal 11 protrudes out of the end cover 203 through the first through hole 211, so as to be connected to the busbar 51, thereby enabling multiple cells 1 to be connected in series or in parallel through the busbar 51.

The end cover endplate 21 of the end cover 203 is provided with the first through hole 211, and the first through hole 211 is fitted with the electrode terminal 11, therefore, if the adhesive overflows to cover an outer wall of the end cover baseplate 21 or the electrode terminal 11 in the process of adhering, the conducting effect of the electrode terminal 11 and the busbar 51 will be adversely affected, and further, an adhesive removing process is required to be added after the adhering process, which not only increases the processing procedure and cost, but also is prone to damaging the cell 1 in the adhesive removing process.

To avoid the above issues, the end cover 203 in this embodiment is adhesively fixed to the cell 1 by the multiple side plates 22. In this case, in one aspect, the distance between the adhesive applying position and the end cover baseplate 21 can be increased so as to avoid overflowed adhesive from covering the end cover baseplate 21 or the electrode terminal 11; and in another aspect, the openings and notches 225 of the mounting groove 32 can be used to perform the adhesive applying operation, since the adhesive applying position is provided on the multiple side plates 22, so the operation is more convenient.

In order to improve the effect of fixing of the end cover 203 to the cell 1, the adhering area between the multiple side plates 22 and the cell 1 in the end cover 203 is 50%-80% of the contact are of the multiple side plates 22 in the end cover 203 with the cell 1, for example, 55%, 60%, 65%, 70% or 75%.

To facilitate the insertion of one end portion of the cell 1 into the mounting groove 32, the mounting groove 32 is in clearance fit with the cell 1, which facilitates the assembling of the cell 1 to the end cover 203.

In order to ensure that there is a certain contact pressure between the cell 1 and the multiple side plates 22, to thereby improving the adhering effect, optionally, the fitting gap between the mounting groove 32 and the cell 1 is 1mm to 2mm, for example, 1.2 mm, 1.4mm, 1.6mm, or 1.8mm.

### Embodiment three

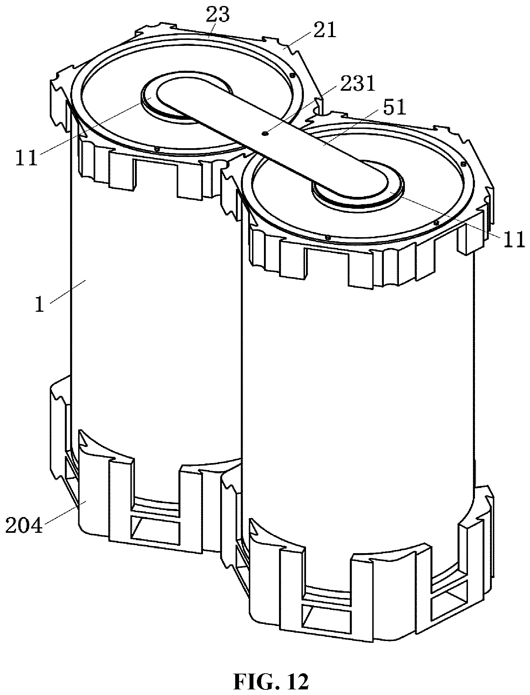

In order to ensure normal operation of the cell module, the busbar 51 is required to be insulated from the case of the cell 1. As shown in FIG. 12, a battery system is provided according to this embodiment, which, on the basis of embodiment two, has the end cover 203 made of an insulating material, so that the busbar 51 can be insulated from the case of the cell 1, and the process for performing the insulation treatment on the busbar 51 is avoided, thereby facilitating the improvement of reliability of the cell module and the reduction of costs of the cell module.

Optionally, the end cover 203 may be made of a plastic material, which is low in cost and light in weight. Optionally, the end cover 203 is integrally formed by injection molding process to simplify the processing steps.

The busbar 51 in this embodiment is not required to be subjected to the insulation process, which facilitates the reduction of machining cost. The busbar 51 and the casing of the cell 1 are separated by the end cover 203 made of an insulating material, so that the effect of insulation between the busbar 51 and the casing of the cell 1 is good.

The end cover baseplate 21 is provided with a flange 23 around the first through hole 211, for supporting the busbar 51, so that the distance between the busbar 51 and the casing of the cell 1 can be further increased, thereby making the effect of insulation of the busbar 51 from the casing of the cell 1 better.

Optionally, the flange 23 is provided with a positioning column 231 which is fitted with the busbar 51, and the busbar 51 is provided with a positioning hole. When to install the busbar 51, the positioning column 231 is extended into the positioning hole so as to limit the position of the busbar 51 by the cooperation of the positioning column 231 and the positioning hole, thereby improving the positioning effect of the busbar 51 and preventing the busbar 51 from being separated from the electrode terminal 11 or from being in contact with the casing of the cell 1 due to displacement by an external force. The connection between the positioning column 231 and the positioning hole may be engagement or riveting.

### Embodiment four

The cell 1 may generate heat during operation, and if the temperature of the cell 1 is too high to cause thermal runaway, a high-pressure gas will be generated in the cell 1. If the gas cannot be discharged rapidly, the cell 1 is at risk of explosion as the gas pressure increases.

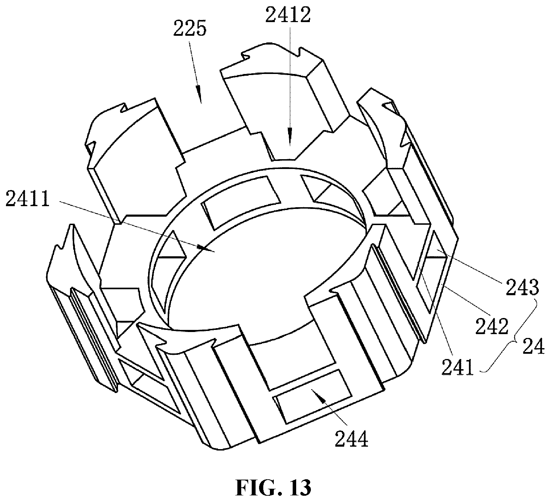

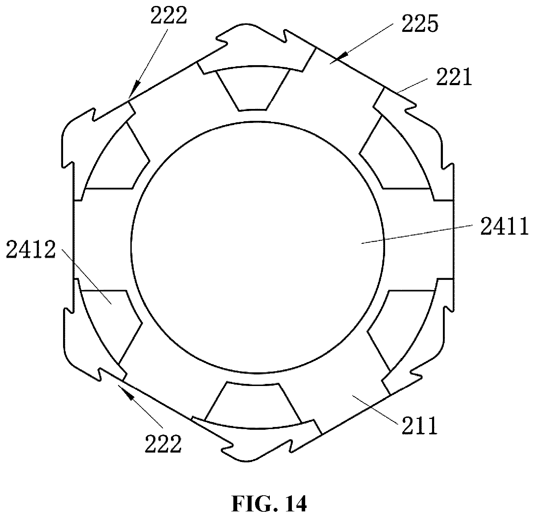

To ensure safety in use of the cell module, a battery system is provided according to this embodiment, which is improved on the basis of embodiment two or embodiment three. As shown in FIG. 13 and FIG. 14, the base seat baseplate 24 of the base seat 204 and the end cover baseplate 21 are different in structure, the base seat 204 includes a pressure relief chamber 25 in communication with the mounting groove 32, the bottom end portion of the cell 1 is disposed in the base seat 204 and abuts against the base seat baseplate 24, and the pressure relief chamber 25 is provided with a pressure relief hole 244.

When thermal runaway of the cell 1 occurs, the explosion-proof valve at the bottom of the cell 1 explodes so that the gas and the ejections generated inside the cell 1 enter the pressure relief chamber 25 from the mounting groove 32 and exits through the pressure relief hole 244, thus achieving the object that no fire ignition or explosion occurs under thermal runaway of the cell 1, thereby ensuring safety in use of the cell module and significantly reducing the adverse effects on other cells 1.

In order to ensure the pressure relief effect of the pressure relief chamber 25 and to enable the explosion-proof valve at the bottom of the cell 1 to be effectively opened, the pressure relief chamber 25 is required to have a certain space, and optionally, the pressure relief chamber 25 has a height of 5mm to 20mm, for example, 10mm, 12mm, 15mm or 18mm. When the height of the pressure relief chamber 25 is within this range, the pressure relief effect is good.

The base seat baseplate 24 is a double-layer structure in which a pressure relief chamber 25 is formed, and the base seat baseplate 24 is provided with a second through hole 2411 in communication with the pressure relief chamber 25, and via the second through hole 2411, the mounting groove 32 is in communication with the pressure relief chamber 25. When the cell 1 is placed in the mounting groove 32 formed in the base seat 204, the explosion-proof valve at the bottom of the cell 1 is opposite to the second through hole 2411. When the cell 1 is thermal runaway, the second through hole 2411 provides a blasting space for the explosion-proof valve. The gas and the ejections generated inside the cell 1 enter the pressure relief chamber 25 through the second through hole 2411 and is discharged from the pressure relief hole 244.

Optionally, the pressure relief hole 244 is provided at a lateral side of the base seat baseplate 24 to allow the gas to be discharged in the radial direction of the cell 1, so as to prevent the gas from flowing upward and coming into contact with the cell 1, which facilitates the improvement of the safety performance of the cell module.

In order to improve the fixing effect of the cell 1 to the base seat 204, multiple adhesive application recesses 2412 are provided in the mounting groove 32, and the multiple adhesive application recesses 2412 are used for accommodating the adhesive so as to ensure that sufficient adhesive is used for adhering the cells 1 to the base seat 204, thereby improving the firmness of the adhesion.

Optionally, in order to facilitate the adhesive application, multiple adhesive application recesses 2412 are configured in a slot bottom face of the mounting groove 32, which, compared with the situation that the adhesive is applied on the side wall of the mounting groove 32, can prevent the adhesive from flowing to the periphery under the action of gravity, so as to prevent the adhesive from adhering to other positions of the cell 1 and the base seat 204.

The multiple adhesive application recesses 2412 are configured adjacent to the sidewall of the mounting groove 32, i.e., the multiple adhesive application recesses 2412 are configured at the edge of the base seat baseplate 24 to avoid adhesive from clogging the second through holes 2411 and further adversely affecting pressure relief.

In this embodiment, multiple adhesive application recesses 2412 are provided, and are configured at intervals in a circumferential direction of the base seat baseplate 24. By providing multiple adhesive application recesses 2412, the cell 1 can be adhered to the base seat 204 through multiple adhering positions, and the multiple adhering positions are close to the radial edge of the cell 1, thereby improving the firmness of the fixation.

The base seat baseplate 24 includes an upper plate 241, a lower plate 242, and multiple reinforcing blocks 243. The upper plate 241 and the lower plate 242 are disposed oppositely and spaced apart to form the pressure relief chamber 25, and the second through hole 2411 is provided in the upper plate 241 and the lower plate 242 to penetrate the base seat baseplate 24. Multiple reinforcing blocks 243 are disposed between the upper plate 241 and the lower plate 242, and are connected to the upper plate 241 and the lower plate 242, respectively, to allow the base seat baseplate 24 to be integrally formed. When the cell 1 is fixed to the base seat 204, the upper plate 241 supports an end face of a bottom end portion of the cell 1, and multiple adhesive application recesses 2412 are provided in the upper plate 241 to allow the cell 1 to be adhesively fixed to the upper plate 241. In this embodiment, the pressure relief chamber 25 includes a cylindrical chamber located below the second through hole 2411 and a chamber between two adjacent reinforcing blocks 243.

To ensure that the multiple adhesive application recesses 2412 each have a certain depth to accommodate more adhesive, the multiple reinforcing blocks 243 are respectively located below the multiple adhesive application recesses 2412, and the multiple adhesive application recesses 2412 extend downwardly into the multiple reinforcing blocks 243 in a one-to-one correspondence to ensure that the multiple adhesive application recesses 2412 can each have a sufficient depth.

Further, it further facilitates the improvement of strength of the base seat baseplate 24 that the multiple reinforcing blocks 243 are disposed below the multiple adhesive application recesses 2412 respectively, so as to ensure that the base seat baseplate 24 is sufficiently capable of supporting the cell 1.

In this embodiment, multiple reinforcing blocks 243 are disposed at intervals in the circumferential direction of the second through hole 2411, and a pressure relief hole 244 is formed between two adjacent reinforcing blocks 243 so that the pressure relief chamber 25 is in communication with the outside.

In order to improve the fixing effect of the base seat 204 to the cell 1, the adhesion area of the base seat baseplate 24 to the cell 1 is 50% to 80% of the contact area of the base seat baseplate 24 with the cell 1, for example, 55%, 60%, 65%, 70% or 75%.

To facilitate the insertion of the bottom end portion of the cell 1 into the mounting groove 32 formed in the base seat 204, the mounting groove 32 is in clearance fit with the cell 1, which facilitates the assembling of the cell 1 to the base seat 204.

In order to ensure that there is a certain contact pressure between the cell 1 and the multiple side plates 22, to thereby improving the adhering effect, optionally, the fitting gap between the mounting groove 32 and the cell 1 is 1mm to 2mm, for example, 1.2 mm, 1.4mm, 1.5mm, 1.7mm or 1.9mm.

Optionally, the multiple adhesive application recesses 2412 extend to the multiple side plates 22, respectively, so that after the cell 1 is placed in the mounting groove 32, the cell 1 can extrude excessive adhesive to the multiple side plates 22, thereby increasing the area of adhesion between the cell 1 and the base seat 204 to improve the adhesion effect.

Optionally, the width of each adhesive application recess 2412 is gradually increased in a radial direction of the second through hole 2411 from the inside to the outside of the mounting groove 32. Such a configuration allows that the adhesive located near the second through hole 2411 is less, and the adhesive near the multiple side plates 22 is more, to prevent the adhesive from blocking the second through hole 2411 after it overflows. Compared with the case where the widths of the multiple adhesive application recesses 2412 are constant, the above-described configuration can increase the amount of adhesive applied, to improve the adhesion fixing effect.

In this embodiment, each of the end cover 203 and the base seat 204 is an integrally formed structures to facilitate processing and reduce costs.

## Claims

1. A cell module, comprising:
a cell fixing bracket (20);
a plurality of rows of cell groups (10), wherein the plurality of rows of cell groups (10) are disposed on the cell fixing bracket (20), each row of cell group (10) of the plurality rows of cell groups (10) comprises a plurality of cells (1), each row of cell group (10) other than a first row of cell group (10) and a last row of cell group (10) has a first spacing H from an adjacent row of cell group (10), and has a second spacing h from another adjacent cell group (10), and the first spacing H is greater than the second spacing h; and
a liquid cooling plate (3) disposed between two rows of the plurality of rows of cell groups (10) spaced apart by the first spacing H, and configured to regulate temperature of a plurality of cells (1) near the liquid cooling plate (3),
wherein the cell fixing bracket (20) comprises a plurality of bracket sets (206) arranged in a second direction Y, each of the plurality of bracket sets (206) comprises two adjacent bracket bodies (201) arranged in the second direction Y, the two adjacent bracket bodies (201) arranged in the second direction Y are detachably connected,
**characterised in that** each bracket body (201) of the two adjacent bracket bodies (201) is provided with a plurality of mounting portions (205) arranged in a first direction X, each of the plurality of mounting portions (205) is configured to mount one cell (1), and the second direction Y and the first direction X are set at an included angle,
and a centerline of the plurality of mounting portions (205) parallel to the first direction X is a first centerline b, and a centerline of each bracket body (201) parallel to the first direction X is a second centerline a;
wherein the first centerline (b) and the second centerline (a) satisfy either:
(i) the first centerline b and the second centerline a are set at an interval; and
two first centerlines b of the mounting portions (205) respectively disposed on the two adjacent bracket bodies (201) of each bracket set (206) are located on two sides of the two second centerlines a of the two adjacent bracket bodies (201), respectively, or
(ii) in the two adjacent bracket bodies (201) of each bracket set (206), a first center line b of mounting portions (205) disposed on a first bracket body (201) and a second center line a of the first bracket body (201) are set at an interval, and a first center line b of mounting portions (205) disposed on a second bracket body (201) coincides with a second center line a of the second bracket body (201).

2. The cell module according to claim 1, wherein each of the plurality of mounting portions (205) is a mounting groove (32), and an end portion of each of the plurality of cells (1) is fixed in the mounting groove (32).

3. The cell module according to claim 1, wherein each bracket body (201) comprises a plurality of splicing seats (202) arranged in the first direction X, each two adjacent splicing seats (202) are detachably connected, and each of the plurality of splicing seats (202) is provided with one mounting portion (205),
wherein each splicing seat (202) of the plurality of splicing seats (202) is provided with an engaging portion (26), and the two adjacent splicing seats (202) are engaged into each other through the engaging portions (26),
wherein each splicing seat (202) is of a regular prismatic structure, a sidewall on each side of each splicing seat (202) is provided with an engaging portion (26), and the two adjacent bracket bodies (201) are engaged into each other through the engaging portions (26).

4. The cell module according to claim 3, wherein the liquid cooling plate (3) is a corrugated plate to allow the liquid cooling plate (3) to cool each of the plurality of cells (1) on two sides of the liquid cooling plate (3).

5. The cell module according to claim 3, wherein each splicing seat (202) comprises:
a baseplate (21, 24), wherein the baseplate (21, 24) is a regular polygonal plate; and
a plurality of side plates (22), wherein each side edge of the baseplate (21, 24) is connected to a side plate (22) of the plurality of side plates (22), the baseplate (21, 24) and the plurality of side plates (22) enclose to define the mounting groove (32), an end portion of each of the plurality of cells (1) is disposed in the mounting groove (32), and each of the side plates (22) is provided with the engaging portion (26).

6. The cell module according to claim 5, wherein a number of the plurality of side plates (22) provided on each splicing seat (202) is an even number, and in oppositely disposed two side plates (22), the engaging portion (26) of a first side plate (22) is an engaging block (221), and the engaging portion (26) of a second side plate (22) is an engaging groove (222).

7. The cell module according to any one of claims 1 to 6, wherein the liquid cooling plate (3) is in communication with a connecting tube (31).

8. The cell module according to any one of claims 1 to 6, wherein a number of the cell fixing racks (20) provided is two, and two end portions of each of the plurality of cells (1) are connected in one-to-one correspondence to two cell fixing racks (20), respectively.

9. The cell module according to any one of claims 1 to 6, wherein two end portions of each cell of the plurality of cells (1) comprise a top end portion and a bottom end portion, the cell fixing bracket (20), to which the top end portion of each cell (1) is connected, is provided with, corresponding to each cell (1), a first through hole (211), and an electrode terminal (11) of the top end portion of each cell (1) protrudes out from the first through hole (211) to be connected to a busbar (51).

10. The cell module according to claim 9, wherein the cell fixing bracket (20), to which the top end portion of each cell (1) is connected, is made of an insulating material and supports the busbar (51),
wherein the cell fixing bracket (20), to which the top end portion of each cell (1) is connected, is provided with a flange (23) around the first through hole (211), and the flange (23) is configured to support the busbar (51),
wherein the flange (23) is provided with a positioning column (231), and the positioning column (231) is configured to fix the busbar (51).

11. The cell module according to any one of claims 1 to 6, wherein two end portions of each cell of the plurality of cells (1) comprise a top end portion and a bottom end portion, a cell fixing bracket (20), to which the bottom end portion of each cell (1) is connected, is provided with, corresponding to the bottom end portion of each cell (1), a pressure relief chamber (25) in communication with a mounting groove (32), and the cell fixing bracket (20), to which the bottom end portion of each cell (1) is connected, is further provided with a pressure relief hole (244) in communication with the pressure relief chamber (25).

12. A battery system, comprising the cell module according to any one of claims 1 to 11.

## Patentansprüche

1. Zellmodul, umfassend:
eine Zellbefestigungshalterung (20);
eine Vielzahl von Reihen von Zellgruppen (10), wobei die Vielzahl von Reihen von Zellgruppen (10) auf der Zellbefestigungshalterung (20) angeordnet ist, jede Reihe von Zellgruppen (10) der Vielzahl von Reihen von Zellgruppen (10) eine Vielzahl von Zellen (1) umfasst, jede Reihe von Zellgruppen (10) außer einer ersten Reihe von Zellgruppen (10) und einer letzten Reihe von Zellgruppen (10) einen ersten Abstand H von einer benachbarten Reihe von Zellgruppen (10) und einen zweiten Abstand h von einer anderen benachbarten Zellgruppe (10) aufweist, wobei der erste Abstand H größer ist als der zweite Abstand h; und
eine Flüssigkeitskühlplatte (3), die zwischen zwei Reihen der mehreren Reihen von Zellgruppen (10) angeordnet ist, die durch den ersten Abstand H voneinander beabstandet sind, und die dazu konfiguriert ist, die Temperatur einer Vielzahl von Zellen (1) in der Nähe der Flüssigkeitskühlplatte (3) zu regulieren,
wobei die Zellbefestigungshalterung (20) eine Vielzahl von Halterungssätzen (206) umfasst, die in einer zweiten Richtung Y angeordnet sind, wobei jeder der Vielzahl von Halterungssätzen (206) zwei benachbarte Halterungskörper (201) umfasst, die in der zweiten Richtung Y angeordnet sind, wobei die beiden benachbarten Halterungskörper (201), die in der zweiten Richtung Y angeordnet sind, lösbar miteinander verbunden sind,
**dadurch gekennzeichnet, dass** jeder Halterungskörper (201) der beiden benachbarten Halterungskörper (201) mit einer Vielzahl von Montageabschnitten (205) versehen ist, die in einer ersten Richtung X angeordnet sind, wobei jeder der Vielzahl von Montageabschnitten (205) zur Montage einer Zelle (1) konfiguriert ist, und die zweite Richtung Y und die erste Richtung X in einem eingeschlossenen Winkel zueinander stehen,
und wobei eine Mittellinie der mehreren Montageabschnitte (205) parallel zur ersten Richtung X eine erste Mittellinie b und eine Mittellinie jedes Halterungskörpers (201) parallel zur ersten Richtung X eine zweite Mittellinie a ist;
wobei die erste Mittellinie (b) und die zweite Mittellinie (a) entweder
(i) die erste Mittellinie b und die zweite Mittellinie a in einem Abstand zueinander angeordnet sind; und
sich zwei erste Mittellinien b der Montageabschnitte (205), die jeweils an den beiden benachbarten Halterungskörpern (201) jedes Halterungssatzes (206) angeordnet sind, jeweils auf zwei Seiten der beiden zweiten Mittellinien a der beiden benachbarten Halterungskörper (201) befinden, oder
(ii) in den beiden benachbarten Halterungskörpern (201) jedes Halterungssatzes (206) eine erste Mittellinie b von Montageabschnitten (205), die an einem ersten Halterungskörper (201) angeordnet sind, und eine zweite Mittellinie a des ersten Halterungskörpers (201) in einem Abstand voneinander angeordnet sind, und eine erste Mittellinie b von Montageabschnitten (205), die an einem zweiten Halterungskörper (201) angeordnet sind, mit einer zweiten Mittellinie a des zweiten Halterungskörpers (201) zusammenfällt,
erfüllen.

2. Zellmodul nach Anspruch 1, wobei jeder der mehreren Montageabschnitte (205) eine Montagenut (32) ist und ein Endabschnitt jeder der mehreren Zellen (1) in der Montagenut (32) befestigt ist.

3. Zellmodul nach Anspruch 1, wobei jeder Halterungskörper (201) mehrere in der ersten Richtung X angeordnete Spleißsitze (202) umfasst, wobei jeweils zwei benachbarte Spleißsitze (202) lösbar miteinander verbunden sind und jeder der mehreren Spleißsitze (202) mit einem Montageabschnitt (205) versehen ist,
wobei jeder Spleißsitz (202) der mehreren Spleißsitze (202) mit einem Eingriffsabschnitt (26) versehen ist und die beiden benachbarten Spleißsitze (202) über die Eingriffsabschnitte (26) ineinander eingreifen,
wobei jeder Spleißsitz (202) eine regelmäßige prismatische Struktur ist, eine Seitenwand auf jeder Seite jedes Spleißsitzes (202) mit einem Eingriffsabschnitt (26) versehen ist und die beiden benachbarten Halterungskörper (201) über die Eingriffsabschnitte (26) ineinander eingreifen.

4. Zellmodul nach Anspruch 3, wobei die Flüssigkeitskühlplatte (3) eine gewellte Platte ist, damit die Flüssigkeitskühlplatte (3) jede der mehreren Zellen (1) auf zwei Seiten der Flüssigkeitskühlplatte (3) kühlen kann.

5. Zellmodul nach Anspruch 3, wobei jeder Spleißsitz (202) Folgendes umfasst:
eine Grundplatte (21, 24), wobei die Grundplatte (21, 24) eine regelmäßig polygonale Platte ist; und
eine Vielzahl von Seitenplatten (22), wobei jede Seitenkante der Grundplatte (21, 24) mit einer Seitenplatte (22) der Vielzahl von Seitenplatten (22) verbunden ist, wobei die Grundplatte (21, 24) und die mehreren Seitenplatten (22) die Montagenut (32) umschließen, um diese zu definieren, wobei ein Endabschnitt jeder der mehreren Zellen (1) in der Montagenut (32) angeordnet und jede der Seitenplatten (22) mit dem Eingriffsabschnitt (26) versehen ist.

6. Zellmodul nach Anspruch 5, wobei die Anzahl der mehreren Seitenplatten (22), die an jedem Spleißsitz (202) vorgesehen sind, eine gerade Zahl ist, und wobei in zwei gegenüberliegend angeordneten Seitenplatten (22) der Eingriffsabschnitt (26) einer ersten Seitenplatte (22) ein Eingriffsblock (221) und der Eingriffsabschnitt (26) einer zweiten Seitenplatte (22) eine Eingriffsnut (222) ist.

7. Zellmodul nach einem der Ansprüche 1 bis 6, wobei die Flüssigkeitskühlplatte (3) mit einem Verbindungsrohr (31) in Verbindung steht.

8. Zellmodul nach einem der Ansprüche 1 bis 6, wobei die Anzahl der vorgesehenen Zellbefestigungsgestelle (20) zwei beträgt und zwei Endabschnitte jeder der mehreren Zellen (1) jeweils eins zu eins mit zwei Zellbefestigungsgestellen (20) verbunden sind.

9. Zellmodul nach einem der Ansprüche 1 bis 6, wobei zwei Endabschnitte jeder Zelle der mehreren Zellen (1) einen oberen Endabschnitt und einen unteren Endabschnitt umfassen, wobei die Zellbefestigungshalterung (20), mit der der obere Endabschnitt jeder Zelle (1) verbunden ist, entsprechend jeder Zelle (1) mit einem ersten Durchgangsloch (211) versehen ist, und ein Elektrodenanschluss (11) des oberen Endabschnitts jeder Zelle (1) aus dem ersten Durchgangsloch (211) herausragt, um mit einer Sammelschiene (51) verbunden zu werden.

10. Zellmodul nach Anspruch 9, wobei die Zellbefestigungshalterung (20), mit der der obere Endabschnitt jeder Zelle (1) verbunden ist, aus einem isolierenden Material besteht und die Sammelschiene (51) stützt,
wobei die Zellbefestigungshalterung (20), mit der der obere Endabschnitt jeder Zelle (1) verbunden ist, mit einem Flansch (23) um das erste Durchgangsloch (211) versehen ist, wobei der Flansch (23) dazu konfiguriert ist, die Sammelschiene (51) zu stützen,
wobei der Flansch (23) mit einer Positionierungssäule (231) versehen ist und die Positionierungssäule (231) dazu konfiguriert ist, die Sammelschiene (51) zu befestigen.

11. Zellmodul nach einem der Ansprüche 1 bis 6, wobei zwei Endabschnitte jeder Zelle der mehreren Zellen (1) einen oberen Endabschnitt und einen unteren Endabschnitt umfassen, wobei eine Zellbefestigungshalterung (20), mit der der untere Endabschnitt jeder Zelle (1) verbunden ist, entsprechend dem unteren Endabschnitt jeder Zelle (1) mit einer Druckentlastungskammer (25) versehen ist, die mit einer Montagenut (32) in Verbindung steht, und wobei die Zellbefestigungshalterung (20), mit der der untere Endabschnitt jeder Zelle (1) verbunden ist, ferner mit einem Druckentlastungsloch (244) versehen ist, das mit der Druckentlastungskammer (25) in Verbindung steht.

12. Batteriesystem, umfassend das Zellmodul nach einem der Ansprüche 1 bis 11.

## Revendications

1. Module de cellule, comprenant :
un support de fixation de cellule (20) ;
une pluralité de rangées de groupes de cellules (10), dans lequel la pluralité de rangées de groupes de cellules (10) sont disposée sur le support de fixation de cellule (20), chaque rangée de groupe de cellules (10) de la pluralité de rangées de groupes de cellules (10) comprend une pluralité de cellules (1), chaque rangée de groupe de cellules (10) autre qu'une première rangée de groupe de cellules (10) et une dernière rangée de groupe de cellules (10) comporte un premier espace H par rapport à une rangée adjacente de groupe de cellules (10), et comporte un second espace h par rapport à un autre groupe de cellules (10) adjacent, et le premier espace H est supérieur au second espace h ; et
une plaque de refroidissement à liquide (3) disposée entre deux rangées de la pluralité de rangées de groupes de cellules (10) espacées par le premier espace H, et configurée pour réguler une température d'une pluralité de cellules (1) proches de la plaque de refroidissement à liquide (3),
dans lequel le support de fixation de cellule (20) comprend une pluralité d'ensembles de supports (206) disposés dans une seconde direction Y, chacun de la pluralité d'ensembles de supports (206) comprend deux corps de support (201) adjacents disposés dans la seconde direction Y, et les deux corps de support (201) adjacents disposés dans la seconde direction Y sont reliés de manière amovible,
**caractérisé en ce que** chaque corps de support (201) des deux corps de support (201) adjacents est pourvu d'une pluralité de parties de montage (205) disposées dans une première direction X, chacune de la pluralité de parties de montage (205) est configurée pour monter une cellule (1), et la seconde direction Y et la première direction X sont prévues à un angle inclus,
et une ligne centrale de la pluralité de parties de montage (205) parallèle à la première direction X est une première ligne centrale b, et une ligne centrale de chaque corps de support (201) parallèle à la première direction X est une seconde ligne centrale a ;
dans lequel la première ligne centrale (b) et la seconde ligne centrale (a) satisfont à l'un des suivants :
(i) la première ligne centrale b et la seconde ligne centrale a sont prévues à un intervalle ; et
deux premières lignes centrales b des parties de montage (205) disposées respectivement sur les deux corps de support (201) adjacents de chaque ensemble de supports (206) sont situées sur deux côtés des deux secondes lignes centrales a des deux corps de support (201) adjacents, respectivement, ou
(ii) dans les deux corps de support (201) adjacents de chaque ensemble de supports (206), une première ligne centrale b des parties de montage (205) disposées sur un premier corps de support (201) et une seconde ligne centrale a du premier corps de support (201) sont prévues à un intervalle, et une première ligne centrale b des parties de montage (205) disposées sur un second corps de support (201) coïncide avec une seconde ligne centrale a du second corps de support (201).

2. Module de cellule selon la revendication 1, dans lequel chacune de la pluralité de parties de montage (205) est une rainure de montage (32), et une partie d'extrémité de chacune de la pluralité de cellules (1) est fixée dans la rainure de montage (32).

3. Module de cellule selon la revendication 1, dans lequel chaque corps de support (201) comprend une pluralité de sièges d'épissage (202) disposés dans la première direction X, chaque deux sièges d'épissage (202) adjacents sont reliés de manière amovible, et chacun de la pluralité de sièges d'épissage (202) est pourvu d'une partie de montage (205),
dans lequel chaque siège d'épissage (202) de la pluralité de sièges d'épissage (202) est pourvu d'une partie d'engagement (26), et les deux sièges d'épissage (202) adjacents sont engagés l'un dans l'autre par l'intermédiaire des parties d'engagement (26),
dans lequel chaque siège d'épissage (202) présente une structure prismatique régulière, une paroi latérale de chaque côté de chaque siège d'épissage (202) est pourvue d'une partie d'engagement (26), et les deux corps de support (201) adjacents sont engagés l'un dans l'autre par l'intermédiaire des parties d'engagement (26).

4. Module de cellule selon la revendication 3, dans lequel la plaque de refroidissement à liquide (3) est une plaque ondulée pour permettre à la plaque de refroidissement à liquide (3) de refroidir chacune de la pluralité de cellules (1) sur deux côtés de la plaque de refroidissement à liquide (3).

5. Module de cellule selon la revendication 3, dans lequel chaque siège d'épissage (202) comprend :
une plaque de base (21, 24), la plaque de base (21, 24) étant une plaque polygonale régulière ; et
une pluralité de plaques latérales (22), dans laquelle chaque bord latéral de la plaque de base (21, 24) est relié à une plaque latérale (22) de la pluralité de plaques latérales (22), la plaque de base (21, 24) et la pluralité de plaques latérales (22) se joignent pour définir la rainure de montage (32), une partie d'extrémité de chacune de la pluralité de cellules (1) est disposée dans la rainure de montage (32), et chacune des plaques latérales (22) est pourvue d'une partie d'engagement (26).

6. Module de cellule selon la revendication 5, dans lequel un nombre de la pluralité de plaques latérales (22) prévues sur chaque siège d'épissage (202) est un nombre pair, et dans deux plaques latérales (22) disposées à l'opposé une de l'autre, la partie d'engagement (26) d'une première plaque latérale (22) est un bloc d'engagement (221), et la partie d'engagement (26) d'une seconde plaque latérale (22) est une rainure d'engagement (222).

7. Module de cellule selon l'une quelconque des revendications 1 à 6, dans lequel la plaque de refroidissement à liquide (3) est en communication avec un tube de liaison (31).

8. Module de cellule selon l'une quelconque des revendications 1 à 6, dans lequel un nombre de supports de fixation de cellule (20) prévus est de deux, et deux parties d'extrémité de chacune de la pluralité de cellules (1) sont reliées en correspondance biunivoque à deux supports de fixation de cellule (20), respectivement.

9. Module de cellule selon l'une quelconque des revendications 1 à 6, dans lequel deux parties d'extrémité de chaque cellule de la pluralité de cellules (1) comprennent une partie d'extrémité supérieure et une partie d'extrémité inférieure, le support de fixation de cellule (20), auquel la partie d'extrémité supérieure de chaque cellule (1) est reliée, est pourvu, correspondant à chaque cellule (1), d'un premier trou traversant (211), et une borne d'électrode (11) de la partie d'extrémité supérieure de chaque cellule (1) fait saille du premier trou traversant (211) pour être reliée à une barre omnibus (51).

10. Module de cellule selon la revendication 9, dans lequel le support de fixation de cellule (20), auquel la partie d'extrémité supérieure de chaque cellule (1) est reliée, est réalisé d'un matériau isolant et supporte la barre omnibus (51),
dans lequel le support de fixation de cellule (20), auquel la partie d'extrémité supérieure de chaque cellule (1) est reliée, est pourvu d'une bride (23) autour du premier trou traversant (211), et la bride (23) est configurée pour supporter la barre omnibus (51),
dans lequel la bride (23) est pourvue d'une colonne de positionnement (231), et la colonne de positionnement (231) est configurée pour fixer la barre omnibus (51).

11. Module de cellule selon l'une quelconque des revendications 1 à 6, dans lequel deux parties d'extrémité de chaque cellule de la pluralité de cellules (1) comprennent une partie d'extrémité supérieure et une partie d'extrémité inférieure, un support de fixation de cellule (20), auquel la partie d'extrémité inférieure de chaque cellule (1) est reliée, est pourvu, correspondant à la partie d'extrémité inférieure de chaque cellule (1), d'une chambre de décompression (25) en communication avec une rainure de montage (32), et le support de fixation de cellule (20), auquel la partie d'extrémité inférieure de chaque cellule (1) est reliée, est en outre pourvu d'un trou de décompression (244) en communication avec la chambre de décompression (25).

12. Système de batterie, comprenant le module de cellule selon l'une quelconque des revendications 1 à 11.
